# EUROPÄISCHE PATENTANMELDUNG

(11) **EP 2 634 017 A1**
(43) Veröffentlichungstag der Anmeldung: **04.09.2013**
(21) Anmeldenummer: 13150358.3
(22) Anmeldetag: 07.01.2013
(51) Int. Cl.: B60C 27/08

(54) **Kette zur Montage an einem Fahrzeugreifen**

(30) Priorität: 01.03.2012 AT 500502012
(71) Anmelder: Pewag Schneeketten GmbH & Co KG, 9371 Brückl (AT)
(72) Erfinder: Pengg, Ägyd, 9210 Pörtschach (AT)
(74) Vertreter: Patentanwaltskanzlei Matschnig & Forsthuber OG

(57) **Zusammenfassung**

Die Erfindung betrifft eine Kette (1) zur Montage an einen Fahrzeugreifen, insbesondere eine Gleitschutzkette, wobei die Kette (1) ein Laufnetz (2) aufweist, das im montierten Zustand auf der Lauffläche (3) eines Fahrzeugreifens angeordnet ist und über innere Schulterketten (4) mit einem inneren Haltestrang (5) auf der Fahrzeugreifeninnenseite (300) und über äußere Schulterketten (6) mit einem äußeren Haltestrang (7) auf der Fahrzeugreifenaußenseite (400) verbunden ist, wobei das Laufnetz (2) im Wesentlichen aus geraden Kettengliedern gebildet wird und die inneren Schulterketten (4) zumindest in einem Abschnitt, der im montierten Zustand auf der Fahrzeugreifeninnenseite (300) angeordnet ist, aus gedrehten Kettengliedern gebildet werden. Die Erfindung betrifft außerdem einen Kettenstrang (9), beispielsweise zum Einsatz in einer derartigen Kette (1).

## Beschreibung

Die Erfindung betrifft eine Kette zur Montage an einen Fahrzeugreifen, insbesondere eine Gleitschutzkette, wobei die Kette ein aus Kettensträngen aufgebautes Kettennetz mit einem mittleren Bereich, der im montierten Zustand der Kette auf der Lauffläche eines Fahrzeugreifens angeordnet ist, einem inneren Randbereich, welcher mit einem inneren Haltestrang verbunden ist, und einem äußeren Randbereich, welcher mit einem äußeren Haltestrang verbunden ist, aufweist, wobei sich der mittlere Bereich zwischen dem inneren und dem äußeren Randbereich befindet und im montierten Zustand der Kette der innere Randbereich der Kette auf einer dem Fahrzeug zugewandten Innenseite des Fahrzeugreifens angeordnet ist und der äußere Randbereich auf einer vom Fahrzeug abgewandten Außenseite des Fahrzeugreifens angeordnet ist. Die Erfindung betrifft außerdem einen Kettenstrang für eine derartige Kette.

Aus dem Stand der Technik ist eine Vielzahl von Ketten bekannt, die das Durchrutschen insbesondere angetriebener Räder eines Kraftfahrzeugs auf befestigtem und unbefestigtem Boden verhindern sollen. Anwendung finden derartige Gleitschutzketten beispielsweise bei Arbeitsfahrzeugen, die auf rutschigem oder weichem Untergrund wie Schlamm, Schnee und gefrorenem Boden zum Einsatz kommen.

Die Gleitschutzketten weisen zumeist ein Laufnetz auf, das im montierten Zustand auf der Lauffläche eines Fahrzeugreifens angeordnet ist. Das Laufnetz wird üblicherweise über Schulterketten auf der Innen- und Außenseite mit Haltsträngen verbunden, die zur Abspannung des Laufnetzes bzw. der Kette dienen. Derartige Ketten werden üblicherweise mit Kettensträngen aus geraden oder gedrehten Kettengliedern verschiedenen Querschnitts realisiert. Bei den Haltesträngen kann es sich um Ketten, Drahtseile oder ähnliche Lösungen handeln.

Bekannte Lösungen werden einerseits durchgehend mit gedrehten Kettengliedern gefertigt, beispielsweise um einen möglichst geringen Platzbedarf bzw. reduziertes Auftragsmaß zu haben. Darunter leiden allerdings die Traktionseigenschaften der Ketten. Ketten mit geraden Kettengliedern nehmen im Gegensatz dazu viel Platz in Anspruch und es kann bei der Verwendung zu Beschädigungen von Fahrzeugen kommen.

Es ist daher eine Aufgabe der Erfindung, eine Kette bereitzustellen, die die oben genannten Nachteile des Stands der Technik behebt.

Diese Aufgabe wird durch eine eingangs erwähnte Gleitschutzkette erfindungsgemäß dadurch gelöst, dass der mittlere Bereich zumindest überwiegend aus geraden Kettengliedern gebildet ist und der innere Randbereich aus gedrehten Kettengliedern gebildet ist.

Die Erfindung ermöglicht eine Kette, die einerseits aufgrund der Ausführung des mittleren Bereichs des Kettennetzes gute Traktionseigenschaften aufweist und andererseits ein reduziertes Auftragsmaß auf der dem Fahrzeug zugewandten Innenseite des Fahrzeugreifens (also der Fahrzeugreifeninnenseite) besitzt. Die geraden Glieder des mittleren Bereichs des Kettennetzes, der als Laufnetz fungiert und mit verschiedenen Laufnetzgeometrien ausgeführt sein kann, wirken traktionskraftübertragend während die gedrehten Kettenglieder des inneren Randbereichs zur Befestigung bzw. Spannung der Kette dienen. Die Kettenglieder des äußeren Randbereichs können im Prinzip beliebig ausgeführt sein, beispielsweise ebenfalls mit geraden Kettengliedern.

Bei der erfindungsgemäßen Lösung kommen herkömmliche Kettenglieder zum Einsatz, die im Wesentlichen ovalförmig mit einer inneren Öffnung ausgeführt sind und zwei im Wesentlichen parallel angeordnete Längsschenkel aufweist, die über zwei im Wesentlichen halbkreisförmige Enden miteinander verbunden sind. Unter geraden Kettengliedern werden hier Kettenglieder verstanden, deren Längsschenkel eine Ebene aufspannen, wobei in einem Kettenverbund jeweils ein stehendes an ein liegendes Kettenglied anschließt. Stehend und liegend ist hier im Bezug auf eine Fahrzeugreifenoberfläche zu verstehen, wobei bei einem liegenden Kettenglied die von den Längsschenkeln aufgespannte Ebene parallel zu einer solchen Oberfläche verläuft, während bei einem stehenden Kettenglied die von den Längsschenkeln aufgespannte Ebene normal zu einer solchen Oberfläche verläuft.

Die Längsschenkel von gedrehten Kettengliedern erstrecken sich im Wesentlichen in entgegengesetzter Richtung von der Fahrzeugreifenoberfläche weg. Die einander gegenüberliegenden Enden der Glieder sind gegeneinander verdreht. Der Verdrehungswinkel kann hier je nach Ausführung variieren.

Grundsätzlich können die verwendeten Kettenglieder neben der Eigenschaft gedreht bzw. gerade verschiedene Querschnitte aufweisen. Die Eigenschaft der gedrehten oder geraden Ausführung ist unabhängig vom gewählten Querschnitt. Neben einem kreisförmigen Querschnitt sind beispielsweise auch D-förmige oder mehreckige Querschnitte möglich. Günstigerweise handelt es sich zumindest bei den Kettengliedern des mittleren Bereichs des Kettennetzes um Kettenglieder mit Vierkantquerschnitt. In einer weiteren vorteilhaften Ausführung der Erfindung sind die Kettenglieder des inneren Randbereichs und/oder die Kettenglieder des äußeren Randbereichs als Kettenglieder mit Vierkantquerschnitt ausgebildet. Der Vierkantquerschnitt, also ein im Wesentlichen quadratischer bzw. rechteckiger Querschnitt, zeichnet sich durch besonders gute Traktionseigenschaften aus.

In einer Variante der Erfindung weist das Kettennetz innere Schulterketten mit einem ersten inneren Schulterkettenabschnitt und einem zweiten inneren Schulterkettenabschnitt auf, wobei sich der erste innere Schulterkettenabschnitt im mittleren Bereich des Kettennetzes befindet und der zweite innere Schulterkettenabschnitt sich im inneren Randbereich des Kettennetzes befindet. Derartige innere Schulterketten können aus zwei unabhängigen Kettensträngen gefertigt werden.

In einer ersten derartigen Variante ist der erste innere Schulterkettenabschnitt als zumindest ein Kettenstrang aus geraden Kettengliedern ausgebildet und der zweite innere Schulterkettenabschnitt ist als zumindest ein Kettenstrang aus gedrehten Kettengliedern ausgebildet, wobei der Kettenstrang des ersten inneren Schulterkettenabschnitts und der Kettenstrang des zweiten inneren Schulterkettenabschnitts über zumindest ein Verbindungsglied miteinander verbunden sind. Das Verbindungsglied kann beispielsweise als Kreisglied, grundsätzlich aber auf verschiedene Arten ausgeführt sein. Die Kettenglieder des ersten und zweiten inneren Schulterkettenabschnitts sind bevorzugt als Kettenglieder mit Vierkantquerschnitt ausgebildet.

In einer zweiten derartigen Variante der Erfindung bestehen die inneren Schulterketten jeweils aus einem durchgehenden, unverzweigten Kettenstrang, wobei die Kettenglieder im ersten inneren Schulterkettenabschnitt gerade ausgebildet sind und die Kettenglieder im zweiten inneren Schulterkettenabschnitt gedreht sind. Die Kettenglieder der inneren Schulterkettenabschnitte sind also identisch zueinander, was Material, Form und Querschnitt angeht - bei der Herstellung derartiger inneren Schulterketten wird ein identer Kettenstrang verwendet, dessen Kettenglieder in einem Abschnitt (der eben im montierten Zustand auf der Fahrzeugreifeninnenseite zu liegen kommt) gedreht werden.

Bei gedrehten Kettengliedern sind die einander gegenüberliegenden Enden des Kettenglieds um einen gewissen Verdrehungswinkel gegeneinander verdreht. Daraus resultiert dann auch eine Verformung der Längsschenkel des Kettenglieds. Der Verdrehungswinkel kann im Prinzip beliebig sein und beispielsweise zwischen 1° und etwa 100° oder mehr liegen. Grundsätzlich sind die gedrehten Kettenglieder bei der vorliegenden Erfindung innerhalb gewisser Toleranzen alle um denselben Verdrehungswinkel verdreht. Gemäß einer Variante der Erfindung nimmt der Verdrehungswinkel der gedrehten Kettenglieder des inneren Randbereichs in Richtung des inneren Haltestrangs hin zu. Während also das erste, unmittelbar an die geraden Kettenglieder anschließende Kettenglied um einen geringen Verdrehungswinkel gedreht ist, nimmt der Verdrehungswinkel in Richtung des inneren Haltestrangs zu. Die Zunahme kann sukzessive oder auch in Sprüngen erfolgen. Beispielsweise kann der Verdrehungswinkel mit jedem Kettenglied geringfügig zunehmen, der Winkel kann sich aber auch gruppenweise ändern, sodass beispielsweise eine bestimmte Anzahl von Kettengliedern denselben Verdrehungswinkel hat und die benachbarte Gruppe an Kettenglieder einen größeren Verdrehungswinkel hat, und so weiter. Beliebige Varianten sind hier möglich, die sich dadurch auszeichnen, dass der Verdrehungswinkel in Richtung des inneren Haltestrangs hin zunimmt. Grundsätzlich ist natürlich auch die umgekehrte Ausführung möglich, dass nämlich der Verdrehungswinkel in Richtung des inneren Haltestrangs hin abnimmt. In einer weiteren möglichen Variante nimmt der Verdrehungswinkel in Richtung des inneren Haltestrangs hin zuerst zu und dann wieder ab, bzw. umgekehrt.

Die genannte Aufgabe wird außerdem von einem eingangs erwähnten Kettenstrang erfindungsgemäß dadurch gelöst, dass der Kettenstrang aus zumindest einem ersten Kettenstrangabschnitt mit gedrehten Kettengliedern und aus zumindest einem daran anschließenden zweiten Kettenstrangabschnitt mit geraden Kettengliedern besteht, wobei der Kettenstrang bevorzugt aus mehreren derartigen Kettenstrangabschnitten besteht, die einander abwechselnd angeordnet sind. Ein derartiger Kettenstrang kann beispielsweise zur Reparatur einer oben beschriebenen Kette dienen. Die Kettenglieder können dabei im Prinzip einen beliebigen Querschnitt aufweisen. Günstigerweise haben die Kettenglieder zumindest im zweiten Kettenstrangabschnitt einen Vierkantquerschnitt. Es sind aber auch Varianten denkbar, in denen nur die Glieder des zweiten Kettenstrangabschnitts oder überhaupt alle Kettenglieder des Kettenstrangs einen Vierkantquerschnitt haben. Bei den gedrehten Kettengliedern können alle Kettenglieder denselben Verdrehungswinkel aufweisen, aber auch Varianten wie oben beschrieben, wo der Verdrehungswinkel über den Strangabschnitt hinweg zu- oder abnimmt, sind möglich.

Die Kettenstrangabschnitte schließen jeweils unmittelbar an die benachbarten Kettenstrangabschnitte an oder zwischen benachbarten Kettenstrangabschnitten ist jeweils zumindest ein Verbindungsglied angeordnet. In der ersten beschriebenen Variante sind also die einzelnen Kettenstrangabschnitte unmittelbar aneinander anschließend - es kann ein Kettenstrang mit identischen Kettengliedern verwendet werden, wobei die Kettenglieder des ersten Kettenstrangabschnitts bei der Produktion gedreht werden können. In der zweiten Variante können im Prinzip verschieden ausgeführte Kettenstrangabschnitte - beliebig ausgeführt im Sinne von Material, Materialstärke, Form und Querschnitt - zu einem erfindungsgemäßen Kettenstrang verbunden werden.

Im Folgenden wird die Erfindung anhand eines nicht einschränkenden Ausführungsbeispiels, das in der Zeichnung dargestellt ist, näher erläutert. In dieser zeigt schematisch:
Fig. 1 die Draufsicht einer erfindungsgemäßen Kette ;
Fig. 2 eine ausschnittsweise Ansicht einer ersten Variante der erfindungsgemäßen Kette;
Fig. 3 eine ausschnittsweise Ansicht einer zweiten Variante der erfindungsgemäßen Kette;
Fig. 4 eine erste Variante eines erfindungsgemäßen Kettenstrangs; und
Fig. 5 eine zweite Variante eines erfindungsgemäßen Kettenstrangs.

In den Figuren sind aus Gründen der Übersichtlichkeit gleiche Elemente mit denselben Bezugszeichen versehen.

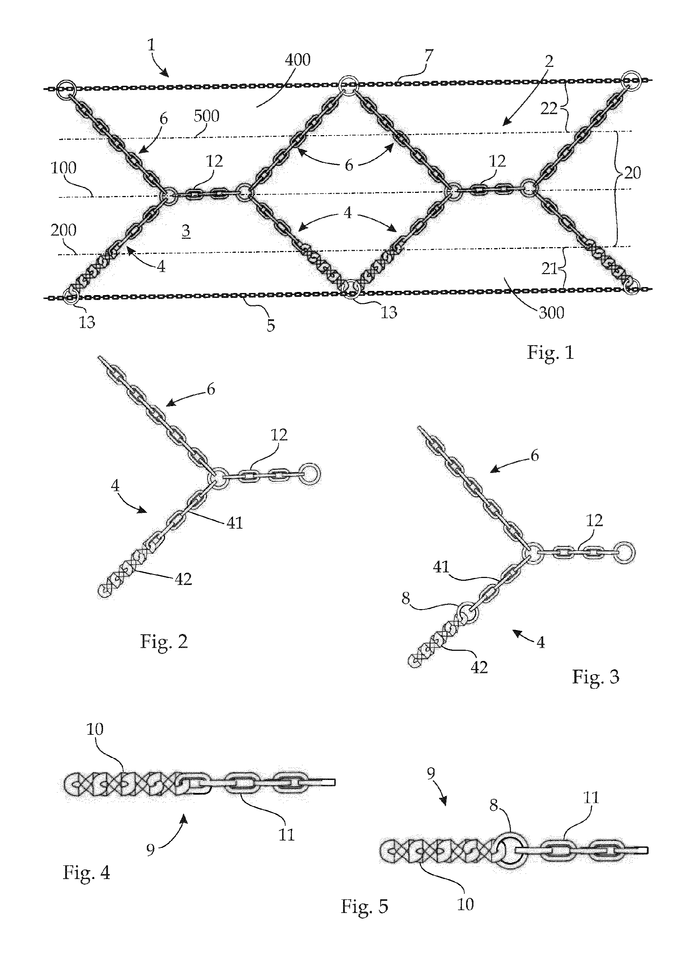

Fig. 1 zeigt eine erfindungsgemäße Kette 1 in einer schematischen Draufsicht. Zum besseren Verständnis der Kette 1 im montierten Zustand sind die relevanten Bereiche eines Fahrzeugreifens, nämlich die Lauffläche 3 mit der Mittelgeraden 100, die dem Fahrzeug zugewandte Innenseite des Fahrzeugreifens (Fahrzeugreifeninnenseite 300) und die vom Fahrzeug abgewandte Außenseite des Fahrzeugreifens (Fahrzeugreifenaußenseite 400) sowie die innere 200 und die äußere Reifenkante 500 in Fig. 1 eingezeichnet. Die innere Reifenkante 200 trennt dabei die Lauffläche 3 und die Fahrzeugreifeninnenseite 300, während die äußere Reifenkante 500 die Lauffläche 3 und die Fahrzeugreifenaußenseite 400 trennt. Die Reifenkanten 200, 500 sind dabei je nach Reifentyp keine abrupten Kanten, sondern stetige Übergänge zwischen Lauffläche 3 und Fahrzeugreifeninnen- 300 bzw. -außenseite 400.

Die Kette 1 weist ein aus Kettensträngen aufgebautes Kettennetz 2 auf. Das Kettennetz 2 umfasst einen mittleren Bereich 20, der im montierten Zustand der Kette 1 auf der Lauffläche 3 des Fahrzeugreifens angeordnet ist. Der mittlere Bereich 20 befindet sich zwischen einem inneren Randbereich 21 und einem äußeren Randbereich 22.

Der innere Randbereich 21 kommt im montierten Zustand der Kette 1 auf einer dem Fahrzeug zugewandten Innenseite des Fahrzeugreifens, der Fahrzeugreifeninnenseite 300, zu liegen. Der innere Randbereich 21 ist mit einem inneren Haltestrang 5 verbunden, wobei sich der innere Haltestrang 5 im montierten Zustand auf der Fahrzeugreifeninnenseite 300 befindet.

Der äußere Randbereich 22 kommt im montierten Zustand der Kette 1 auf einer vom Fahrzeug abgewandten Außenseite des Fahrzeugreifens, der Fahrzeugreifenaußenseite 400, zu liegen und ist mit einem äußeren Haltestrang 7 verbunden. Der äußere Haltestrang 7 befindet sich im montierten Zustand auf der Fahrzeugreifenaußenseite 400. Über die Haltestränge 5, 7 lässt sich die Kette 1 spannen und damit auf dem Fahrzeugreifen befestigen.

Im mittleren Bereich 20 des Kettennetzes 2 sind im dargestellten Ausführungsbeispiel Traktionsstränge 12 angeordnet, die aus geraden Kettengliedern bestehen und im montierten Zustand der Kette 1 im Wesentlichen parallel zur Mittelgeraden 100 der Lauffläche 3 verlaufen. Die Verbindung des Kettennetzes 2 mit den Haltesträngen 5, 7 erfolgt über Schulterketten 4, 6. Innere Schulterketten 4 verbinden die Traktionsstränge 12 mit dem inneren Haltestrang 5 auf der Fahrzeugreifeninnenseite 300, während die Verbindung zum äußeren Haltestrang 7 auf der Fahrzeugreifenaußenseite 400 entsprechend mit den äußere Schulterketten 6 erfolgt. Die Haltestränge 5, 7 können dabei beliebig ausgeführt sein, beispielsweise als Spannkette oder Spannseil.

Die Anbindung der Schulterketten 4, 6 an den Haltesträngen 5, 7 erfolgt mittels Verbindungselementen 13, die im dargestellten Ausführungsbeispiel als Ringglieder ausgeführt sind. Hier sind ebenfalls beliebige andere bekannte Ausführungen, z.B. Haken o.ä., möglich. Selbstverständlich ist die dargestellte Kettennetz-Variante nur eine von mehreren, dem Fachmann bekannten Varianten.

Die inneren Schulterketten 4 weisen einen ersten inneren Schulterkettenabschnitt 41 und einen zweiten inneren Schulterkettenabschnitt 42 auf, wobei sich der erste innere Schulterkettenabschnitt 41 im mittleren Bereich 20 des Kettennetzes 2 befindet und der zweite innere Schulterkettenabschnitt 42 sich im inneren Randbereich 21 des Kettennetzes 2 befindet.

Die äußeren Schulterketten 6 können ebenfalls aus mehreren Abschnitten bestehen, werden aber in den nachfolgenden Ausführungen nicht weiter behandelt. Die Traktionsstränge 12 sowie die äußeren Schulterketten 6 bestehen aus geraden Kettengliedern. Bei geraden Kettengliedern verlaufen die Längsschenkel des Kettenglieds im Wesentlichen parallel zueinander und spannen eine Ebene auf. Im montierten Zustand wechseln sich in der Regel liegende mit stehenden Kettengliedern ab - bei liegenden Kettengliedern liegt die oben genannte Ebene parallel zur Lauffläche 3 des Fahrzeugreifens, während die stehenden Kettenglieder normal zur Lauffläche 3 angeordnet sind.

Die geraden Kettenglieder ermöglichen besonders gute Traktionseigenschaften der Kette 1, insbesondere in Verbindung mit einem passenden Kettengliedquerschnitt, der beispielsweise als Vierkantquerschnitt ausgeführt sein kann. Im dargestellten Ausführungsbeispiel wird das traktionsgebende Laufnetz aus den Traktionssträngen 12 und den im mittleren Bereich 20 des Kettennetzes 2 befindlichen Kettengliedern der äußeren 6 und inneren Schulterketten 4 (also des ersten inneren Schulterkettenabschnitts 41). Grundsätzlich sind auch andere, dem Fachmann bekannte Laufnetzgeometrien möglich, soweit erfindungsgemäß zumindest die im inneren Randbereich 21 angeordneten Kettenglieder gedreht ausgebildet sind.

Die inneren Schulterketten 4 sind erfindungsgemäß derart ausgeführt, dass sie zumindest im zweiten inneren Schulterkettenabschnitt 42, der im montierten Zustand der Kette 1 auf der Fahrzeugreifeninnenseite 300 angeordnet ist, aus gedrehten Kettengliedern gebildet ist. Der erste innere Schulterkettenabschnitt 41, der im montierten Zustand auf der Lauffläche 3 des Fahrzeugreifens angeordnet ist (und gemäß dem dargestellten Ausführungsbeispiel dem mittleren Bereich 20 angehört), besteht aus geraden Kettengliedern, kann aber selbstverständlich ebenfalls aus gedrehten Kettengliedern bestehen. Der zweite innere Schulterkettenabschnitt 42 mit den gedrehten Kettengliedern ist so ausgeführt, dass im montierten Zustand auf der inneren Reifenkante 200 bereits gedrehte Kettenglieder zu liegen kommen. Der zweite innere Schulterkettenabschnitt 42 beginnt im montierten Zustand unmittelbar vor der inneren Reifenkante 200. Es ist entsprechend sicherzustellen, dass im montierten Zustand der zweite innere Schulterkettenabschnitt 42 mit den gedrehten Kettengliedern bereits in diesem Bereich zu liegen kommt. Die Kettenglieder der Schulterketten 4 weisen dabei bevorzugt ebenfalls einen Vierkantquerschnitt auf.

Diese Lösung erlaubt einerseits besonders gute Traktionseigenschaften, andererseits ist der Platzbedarf der zweiten inneren Schulterkettenabschnitte 42 auf der Fahrzeugreifeninnenseite 300 besonders gering. Die geraden Glieder wirken traktionskraftübertragend, während die gedrehten Glieder hauptsächlich zum Halten der Kette 1 bei reduziertem Auftragsmaß an der Fahrzeugreifeninnenseite 300 dienen. Da im Radkasten, bzw. an der Fahrzeugreifeninnenseite 300, meistens beschränkte Platzverhältnisse herrschen und eine Kette 1 mit zu großem Auftragsmaß zu Beschädigungen führen kann, ist die erfindungsgemäße Kette 1 besonders vorteilhaft.

In den Figuren 2 und 3 sind in ausschnittsweiser Ansicht Varianten der erfindungsgemäßen Kette 1 bzw. der inneren Schulterketten 4 dargestellt.

Fig. 2 zeigt die oben beschriebene Variante. Die innere Schulterkette 4 ist aus einem durchgehenden, unverzweigten Kettenstrang gebildet, die Kettenglieder sind hinsichtlich Form, Material, Materialstärke und Querschnitt gleich ausgeführt. Bei der Herstellung kann ein Kettenstrang mit geraden Kettengliedern produziert werden, wobei in einem nachfolgenden Arbeitsschritt die Kettenglieder eines Abschnitts der inneren Schulterkette 4, der dann im montierten Zustand den zweiten inneren Schulterkettenabschnitt 42 bildet, gedreht werden.

Der im montierten Zustand auf der Lauffläche 3 angeordnete erste innere Schulterkettenabschnitt 41 mit geraden Kettengliedern geht also direkt in den auf der Fahrzeugreifeninnenseite 300 angeordneten zweiten inneren Schulterkettenabschnitt 42 mit gedrehten Kettengliedern über.

Fig. 3 zeigt eine zweite Variante, in der der erste innere Schulterkettenabschnitt 41 als zumindest ein Kettenstrang mit geraden Kettengliedern gebildet ist und der zweite innere Schulterkettenabschnitt 42 als zumindest ein Kettenstrang mit gedrehten Kettengliedern gebildet ist, wobei der erste innere Schulterkettenabschnitt 41 und der zweite innere Schulterkettenabschnitt 42 über zumindest ein Verbindungsglied 8 miteinander verbunden sind. Die Schulterkettenabschnitte 41, 42 können auch jeweils aus mehreren Kettensträngen gebildet sein. Das Verbindungsglied 8 kann beispielsweise als Ring ausgeführt sein, selbstverständlich sind auch beliebige andere Ausführungsformen des Verbindungsglieds 8 möglich, z.B. Haken, doppelte Ringe, oder ähnliches.

Die beiden Schulterkettenabschnitte 41, 42 sind somit als separate Kettenstränge ausgeführt, die über das Verbindungsglied 8 verbunden sind. Die Schulterkettenabschnitte 41, 42 können sich also in Punkto Material, Materialstärke, Querschnitt und Form unterscheiden.

Bei gedrehten Kettengliedern sind grundsätzlich die einander gegenüberliegenden Enden des Kettenglieds um einen gewissen Verdrehungswinkel gegeneinander verdreht. Daraus resultiert dann auch eine Verformung der Längsschenkel des Kettenglieds. Der Verdrehungswinkel kann im Prinzip beliebig sein und beispielsweise zwischen 1° und etwa 100° oder mehr liegen.

Gemäß einer ersten Variante der Erfindung weisen die gedrehten Kettenglieder jeweils den gleichen Verdrehungswinkel auf. Nach einer zweiten Variante, die in den Figuren nicht dargestellt ist, haben die gedrehten Kettenglieder unterschiedliche Verdrehungswinkel. Beispielsweise nimmt der Verdrehungswinkel der gedrehten Kettenglieder der inneren Schulterketten 4 (bzw. des zweiten inneren Schulterkettenabschnitts 42) in Richtung des inneren Haltestrangs 5 hin zu. Das an den ersten inneren Schulterkettenabschnitt 41 mit geraden Kettengliedern anschließende Kettenglied hat also nur einen geringen Verdrehungswinkel, wobei der Verdrehungswinkel dann in Richtung des inneren Haltestrangs 5 zunimmt. Diese Zunahme kann entweder sukzessive oder schrittweise erfolgen. Entweder weist somit jedes Kettenglied einen im Vergleich zum vorherigen leicht erhöhten Verdrehungswinkel auf, oder der Verdrehungswinkel erhöht sich gruppenweise - eine Gruppe von beispielsweise drei Kettenglieder hat also einen ersten Verdrehungswinkel, die nächste Gruppe, ebenfalls mit drei oder mehr oder weniger Kettengliedern hat dann einen um einen gewissen Wert erhöhten Verdrehungswinkel.

Natürlich ist auch die umgekehrte Variante möglich, dass also der Verdrehungswinkel in Richtung des inneren Haltestrangs 5 hin abnimmt. In einer weiteren Variante nimmt der Verdrehungswinkel zuerst zu und dann wieder ab, bzw. umgekehrt.

Abgesehen von der oben beschriebenen Kette 1 umfasst die Erfindung auch separate Kettenstränge wie sie beispielsweise als Schulterketten 4, 6 Verwendung finden. Derartige Kettenstränge können beispielsweise zu Reparaturzwecken für obige Kette 1 verwendet werden, aber auch andere Anwendungsbereiche sind möglich.

Fig. 4 zeigt einen derartigen erfindungsgemäßen Kettenstrang 9 gemäß einer ersten Variante, wobei der Kettenstrang 9 zumindest einen ersten Kettenstrangabschnitt 10 mit gedrehten Kettengliedern und zumindest einen zweiten Kettenstrangabschnitt 11 mit geraden Kettengliedern aufweist. Die beiden Kettenstrangabschnitte 11, 12 schließen jeweils unmittelbar an die benachbarten Kettenstrangabschnitte an, damit kann der Kettenstrang 9 beispielsweise aus identischen geraden Kettengliedern gefertigt werden, wobei dann in der Fertigung abschnittsweise Kettenglieder gedreht werden.

Obwohl Fig. 4 nur je einen Kettenstrangabschnitt 11, 12 zeigt, besteht der Kettenstrang 9 bevorzugt aus mehreren derartigen Kettenstrangabschnitten, die einander abwechselnd angeordnet sind. Die Anzahl der Kettenglieder der einzelnen Abschnitte kann beliebig sein - der erste 10 und der zweite Kettenstrangabschnitt 11 können gleich viele oder verschieden viele Kettenglieder aufweisen.

Fig. 5 zeigt eine zweite Variante, wonach die oben genannten Kettenstrangabschnitte 11, 12 jeweils durch zumindest ein Verbindungsglied 8 voneinander getrennt sind. Das Verbindungsglied 8 kann beispielsweise als Ringglied ausgeführt sein. Ein derartiger Kettenstrang 9 kann als aus Kettenstrangabschnitten 11,12 verschiedenster Bauart gebildet sein.

### BEZUGSZEICHEN

- 1: Kette
- 2: Kettennetz
- 3: Lauffläche
- 4: innere Schulterkette
- 5: innerer Haltestrang
- 6: äußere Schulterkette
- 7: äußerer Haltestrang
- 8: Verbindungsglied
- 9: Kettenstrang
- 10: erster Kettenstrangabschnitt
- 11: zweiter Kettenstrangabschnitt
- 12: Traktionsstrang
- 13: Verbindungselement
- 20: mittlerer Bereich (des Kettennetzes 2)
- 21: innerer Randbereich (des Kettennetzes 2)
- 22: äußerer Randbereich (des Kettennetzes 2)
- 41: erster innerer Schulterkettenstrang
- 42: zweiter innerer Schulterkettenstrang
- 100: Mittelgerade (der Lauffläche 3)
- 200: innere Reifenkante
- 300: (Fahrzeugreifen)innenseite
- 400: (Fahrzeugreifen)außenseite
- 500: äußere Reifenkante

## Patentansprüche

1. Kette (1) zur Montage an einen Fahrzeugreifen, insbesondere eine Gleitschutzkette, wobei die Kette (1) ein aus Kettensträngen aufgebautes Kettennetz (2) mit
- einem mittleren Bereich (20), der im montierten Zustand der Kette (1) auf der Lauffläche (3) eines Fahrzeugreifens angeordnet ist,
- einem inneren Randbereich (21), welcher mit einem inneren Haltestrang (5) verbunden ist, und
- einem äußeren Randbereich (22), welcher mit einem äußeren Haltestrang (7) verbunden ist,
aufweist, wobei sich der mittlere Bereich (20) zwischen dem inneren (21) und dem äußeren Randbereich (22) befindet und im montierten Zustand der Kette (1) der innere Randbereich (21) der Kette (1) auf einer dem Fahrzeug zugewandten Innenseite (300) des Fahrzeugreifens angeordnet ist und der äußere Randbereich (22) auf einer vom Fahrzeug abgewandten Außenseite (400) des Fahrzeugreifens angeordnet ist, **dadurch gekennzeichnet, dass** der mittlere Bereich (20) zumindest überwiegend aus geraden Kettengliedern gebildet ist und der innere Randbereich (21) aus gedrehten Kettengliedern gebildet ist.

2. Kette (1) nach Anspruch 1, **dadurch gekennzeichnet, dass** die Kettenglieder des mittleren Bereichs (20) als Kettenglieder mit Vierkantquerschnitt ausgebildet sind.

3. Kette (1) nach Anspruch 1 oder 2, **dadurch gekennzeichnet, dass** die Kettenglieder des inneren Randbereichs (21) und/oder die Kettenglieder des äußeren Randbereichs (22) als Kettenglieder mit Vierkantquerschnitt ausgebildet sind.

4. Kette (1) nach einem der vorhergehenden Ansprüche, **dadurch gekennzeichnet, dass** das Kettennetz (2) innere Schulterketten (4) mit einem ersten inneren Schulterkettenabschnitt (41) und einem zweiten inneren Schulterkettenabschnitt (42) aufweist, wobei sich der erste innere Schulterkettenabschnitt (41) im mittleren Bereich (20) des Kettennetzes (2) befindet und der zweite innere Schulterkettenabschnitt (42) sich im inneren Randbereich (21) des Kettennetzes (2) befindet.

5. Kette (1) nach Anspruch 4, **dadurch gekennzeichnet, dass** der erste innere Schulterkettenabschnitt (41) als zumindest ein Kettenstrang aus geraden Kettengliedern ausgebildet ist und der zweite innere Schulterkettenabschnitt (42) als zumindest ein Kettenstrang aus gedrehten Kettengliedern ausgebildet ist, wobei der Kettenstrang des ersten inneren Schulterkettenabschnitts (41) und der Kettenstrang des zweiten inneren Schulterkettenabschnitts (42) über zumindest ein Verbindungsglied (8) miteinander verbunden sind.

6. Kette (1) nach Anspruch 4, **dadurch gekennzeichnet, dass** die inneren Schulterketten (4) jeweils aus einem durchgehenden, unverzweigten Kettenstrang bestehen, wobei die Kettenglieder im ersten inneren Schulterkettenabschnitt (41) gerade ausgebildet sind und die Kettenglieder im zweiten inneren Schulterkettenabschnitt (42) gedreht ausgebildet sind.

7. Kette (1) nach einem der vorhergehenden Ansprüche, **dadurch gekennzeichnet, dass** der Verdrehungswinkel der gedrehten Kettenglieder des inneren Randbereichs (21) in Richtung zum inneren Haltestrang (5) hin zunimmt.

8. Kettenstrang (9) für eine Kette (1) nach einem der Ansprüche 1 bis 7, **dadurch gekennzeichnet, dass** der Kettenstrang (9) aus zumindest einem ersten Kettenstrangabschnitt (10) mit gedrehten Kettengliedern und aus zumindest einem daran anschließenden zweiten Kettenstrangabschnitt (11) mit geraden Kettengliedern besteht, wobei der Kettenstrang (9) bevorzugt aus mehreren derartigen Kettenstrangabschnitten besteht, die einander abwechselnd angeordnet sind.

9. Kettenstrang (9) nach Anspruch 8, **dadurch gekennzeichnet, dass** die Kettenstrangabschnitte (10, 11) jeweils unmittelbar an die benachbarten Kettenstrangabschnitte anschließen oder dass zwischen benachbarten Kettenstrangabschnitten jeweils zumindest ein Verbindungsglied (8) angeordnet ist.
